# EUROPEAN PATENT SPECIFICATION

(11) **EP 1 741 489 B1**
(45) Date of publication and mention of the grant of the patent: **06.01.2010**
(21) Application number: 06019375.2
(22) Date of filing: 20.08.2004
(51) Int. Cl.: B01L 3/00, G01N 21/03, B01L 3/14

(54) **Container for analyzer, detection container, reaction container and packing container for storing detection container**
Reaktionsgefäss für Analysegeräte
Récipient de réaction pour l'analyse

(30) Priority: 22.08.2003 JP 2003298060; 22.08.2003 JP 2003298107; 23.01.2004 JP 2004016359
(43) Date of publication of application: 10.01.2007
(62) Divisional of application: 04019820.2
(73) Proprietor: SYSMEX CORPORATION, Kobe-shi, Hyogo 651-0073 (JP)
(72) Inventor: Ueda, Makoto, Kakogawa-shi Hyogo 675-0101 (JP); Sakurai, Kazuyuki, Akashi-shi Hyogo 673-0017 (JP); Tobimatsu, Hiroaki, Kobe-shi Hyogo 654-0123 (JP)
(74) Representative: HOFFMANN EITLE

(56) References cited:
- EP-A2- 0 703 456
- EP-A2- 0 831 330
- WO-A-00/21668
- US-A- 3 977 794

## Description

### BACKGROUND OF THE INVENTION

### Field of the Invention

The present invention relates to a container for an analyzer, a detection container, a reaction container and a packing container for storing a detection container, and more particularly, it relates to a container for an analyzer, a detection container and a reaction container each including a container body storing a sample therein and a packing container for storing a detection container.

### Description of the Background Art

A reaction container storing a sample such as a nucleic acid therein is known in general as disclosed in WO95/11083 or U.S. Patent No. 5846489, for example. The aforementioned WO95/11083 discloses a reaction tube for amplifying a nucleic acid, having a sealing member for closing an opening. According to this WO95/11083, part of an amplified sample is sucked out from the reaction tube and incubated in a lidless well having an opening upper portion, so that the sample is dispensed into a lidless detection cell having an opening upper portion for detection of the nucleic acid.

The aforementioned U.S. Patent No. 5846489 discloses a reaction container having a separately provided lid. According to this U.S. Patent No. 5846489, the lid provided separately from the reaction container is opened/closed with respect to the reaction container through a lid detacher for amplifying and detecting a nucleic acid.

However, if external force is applied to the reaction tube disclosed in the aforementioned WO95/11083 when the reaction tube is removed from an analyzer after amplifying the nucleic acid, the sealing member may be opened. In this case, the amplified sample may be scattered out from the reaction tube, to disadvantageously contaminate another sample or a reagent. According to the technique disclosed in WO95/11083, further, the amplified sample must be sucked out from the reaction tube to be moved to the well and further moved to the detection cell in order to detect the nucleic acid, and hence the other sample or the reagent may be contaminated also by this.

According to the aforementioned U.S. Patent No. 5846489, on the other hand, the reaction container and the lid are separated from each other and hence the lid of the reaction container may fall on another container when the same is detached and upwardly moved through the lid detacher. In this case, the lid possibly contaminated may contaminate a sample or a reagent contained in the other container. Also when the lid does not fall, droplets adhering to the lid upwardly moved through the lid detacher may drip down into the other container to contaminate the sample or the reagent contained in this container.

WO 00/21668 A discloses a structure for analysing samples.

### SUMMARY OF THE INVENTION

The present invention has been proposed in order to solve the aforementioned problems, and an object thereof is to provide a container for an analyzer, a detection container and a reaction container each capable of preventing a sample or a reagent from contamination and a packing container for storing a detection container.

In order to attain the aforementioned object a container according to claim 1 is provided. The dependent claims define optional embodiments. A container for an analyzer according to a first example comprises a container body, having an opening, storing a sample therein, a lid member, coupled to the container body, having a closing part closing the opening of the container body and a closing state holding part holding the closing part in a state closing the opening.

In the container for an analyzer according to the first example, as hereinabove described, the lid member is so coupled to the container body as not to fall on another container for an analyzer, whereby no sample in the other container for an analyzer is contaminated due to a fall of the lid member. Further, the closing state holding part holding the closing part in the state closing the opening is so provided that the lid member of the container for an analyzer can be kept in a closed state, whereby the lid member can be prevented from opening through external force. Thus, the sample stored in the container body can be prevented from contaminating another sample or a reagent due to opening of the lid member.

In the aforementioned container for an analyzer according to the first example, the closing state holding part preferably includes a first engaging part provided on the container body and a second engaging part, provided on the lid member, engageable with the first engaging part. According to this structure, the lid member of the detection container can be easily kept in the closed state by engaging the first and second engaging parts with each other.

In the aforementioned container for an analyzer including the first and second engaging parts, the first engaging part is preferably a hook engaging part, and the second engaging part is preferably a hook engageable with the hook engaging part. According to this structure, the lid member of the detection container can be easily kept in the closed state by engaging the hook engaging part and the hook with each other.

In the aforementioned container for an analyzer including the first and second engaging parts, the first engaging part and the second engaging part are preferably so constituted as to engage with each other in the state of the closing part sealing the opening of the container body. According to this structure, the closing part can be reliably held in the state closing the opening of the container body.

In the aforementioned container for an analyzer according to the first aspect, the opening preferably includes a circular opening. According to this structure, the closing part can more easily close the opening as compared with an opening having a rectangular shape or the like.

In the aforementioned container for an analyzer according to the first example, the container body preferably includes a first container body part, having a first opening, storing a sample therein and a second container part, having a second opening, storing a sample therein, and the lid member preferably includes a first closing part closing the first opening of the first container body part and a second closing part closing the second opening of the second container body part. According to this structure, two samples can be parallelly detected through the first and second container body parts, whereby prompt detection can be performed.

In this case, the lid member includes an elastic position correcting part formed between the first closing part and the second closing part. According to this structure, the positions of the first and second closing parts can be easily properly corrected through the position correcting part also when the positions of the first and second closing parts are displaced with respect to the first and second openings, whereby the first and second openings can be reliably closed with the first and second closing parts.

In the aforementioned container for an analyzer according to the first example, the lid member preferably includes a knob. According to this structure, the user can easily dispose the detection container after completion of detection by grasping the knob.

In the aforementioned container for an analyzer according to the first example, the container body may store a sample suspected to contain a target nucleic acid.

In the aforementioned container for an analyzer according to the first example, the lid member preferably includes a container body mounting part for mounting the container body, a lid part including the closing part and a coupling part coupling the lid part and the container body mounting part with each other. According to this structure, the lid member and the container body can be easily coupled with each other by mounting the container body on the container body mounting part of the lid member.

In this case, the container body preferably includes a lid member engaging part, and the container body mounting part of the lid member preferably further includes a container body engaging segment engaging with the lid member engaging part of the container body when the container body is mounted. According to this structure, the container body can be kept in the state mounted on the lid member due to engagement of the lid member engaging part of the container body and the container body engaging segment of the container body mounting part of the lid member, whereby the container body can be prevented from displacement from the lid member.

In the aforementioned container for an analyzer according to the first example, the container body may include a photoirradiation part irradiated with light, and the container for an analyzer may be a detection container. According to this structure, a sample such as a nucleic acid can be detected by irradiating the sample contained in the photoirradiation part of the container body with external light.

In the aforementioned structure of the container for an analyzer which is a detection container, the photoirradiation part of the detection container is preferably formed on a lower portion of the container body, and preferably includes a transparent entrance wall and a transparent exit wall arranged to be opposed to the entrance wall at a prescribed interval. According to this structure, the sample such as a nucleic acid can be easily detected by applying external light to be transmitted through the entrance wall and the exit wall of the container body.

In this case, the opening of the detection container is formed on an upper portion of the container body and has a cross-sectional area larger than the cross-sectional area of the photoirradiation part. According to this structure, the sample can be more easily injected through the opening having the cross-sectional area larger than that of the photoirradiation part as compared with an opening having a small cross-sectional area. Further, a level height necessary for measurement of the sample can be obtained due to the photoirradiation part having the smaller cross-sectional area also when the quantity of the sample is small. Thus, the sample can be measured through photoirradiation also when the same is in a small quantity.

In the aforementioned structure of the container for an analyzer which is a detection container, the photoirradiation part of the detection container may function also as a sample storage part for amplifying a nucleic acid of a sample stored therein.

The aforementioned container for an analyzer according to the first example may be a reaction container.

In the aforementioned structure of the container for an analyzer which is a detection container, the container body of the reaction container may include a sample storage part for amplifying a nucleic acid of a sample stored therein.

A packing container for storing a detection container having a photoirradiation part irradiated with light according to a second example comprises a packing container body including a recess portion for storing the detection container and a support part formed in the recess portion for supporting the detection container so that the photoirradiation part is not in contact with the inner surface of the recess portion.

In the packing container according to the second example, as hereinabove described, the support part for supporting the detection container so that the photoirradiation part of the detection container is not in contact with the inner surface of the recess portion for storing the detection container is so provided that the photoirradiation part of the container body of the detection container can be prevented from coming into contact with the inner surface of the packing container and being flawed.

In the aforementioned packing container according to the second example, the detection container may include a plurality of detection container bodies each having the photoirradiation part and a base provided with the plurality of detection container bodies, and the support part may support the base.

In the aforementioned packing container according to the second example, the support part is preferably so constituted that the detection container is rotatable in the recess portion. According to this structure, the detection container can be inclined and taken out when the user rotates the detection container in the recess portion, whereby he/she can easily take out the detection container from the packing container.

The aforementioned packing container according to the second example preferably further comprises a closing member for closing the recess portion. According to this structure, the closing member can effectively prevent the detection container from contamination in an unused state.

In the aforementioned packing container according to the second example, the packing container body may be constituted to be capable of storing only a single detection container.

A container for an analyzer according to an aspect of the present invention comprises a bottom surface part, a pair of first side walls uprighted from the bottom surface part and arranged to be opposed to each other with substantially flat inner surfaces wherein said pair of first side walls are light transmission walls transmitting light, and said container for an analyzer is a detection container and a pair of second side walls uprighted from the bottom surface part to intersect with the pair of first side walls and arranged to be opposed to each other with substantially flat inner surfaces, while the inner surface of at least one of four corners formed on intersections between the pair of first side walls and the pair of second side walls has a curved shape, characterised in that said pair of first side walls of said detection container include a flaw preventing part formed to project with respect to the outer surfaces of said light transmission walls for preventing the outer surfaces of said light transmission walls from flawing.

In the container for an analyzer according to the aspect, as hereinabove described, the pair of second side walls having the substantially flat inner surfaces are so provided that a void necessary for detection by photoirradiation can be formed between the pair of second side walls also when the interval between the pair of second side walls is reduced to some extent. Thus, the interval between the pair of second side walls can be so reduced that the volume of a portion enclosed with the pair of second side walls and the pair of first side walls can be reduced. Therefore, the quantity of a sample necessary for detection can be so reduced that detection can be made also when the sample is in a small quantity. Further, the inner surface of at least one of the four corner portions formed on the intersections between the pair of first side walls and the pair of second side walls is so formed to have the curved shape that bubbles hardly adhere to the corner portions and a flowing state is improved when a sample or the like is stirred, whereby stirring efficiency can be improved.

In the aforementioned container for an analyzer according to the aspect, the inner surface that has the curved shape may have an arcuate curved shape.

In this case, the inner surface that has the arcuate curved shape has an arcuate curved shape with a radius of curvature of not more than 0.5 mm. When the inner surface that has the curved shape has an arcuate curved shape with a radius of curvature of not more than 5 mm, reduction of the area of a light transmission wall resulting from the arcuate curved shape of the inner surface of at least one corner portion can be suppressed to the utmost.

In the aforementioned container for an analyzer according to the aspect, the inner surface of the bottom surface part preferably has a substantially concave arcuate curved shape. According to this structure, the quantity of the sample necessary for detection can be more reduced as compared with a bottom surface part having a flat shape.

In the aforementioned container for an analyzer according to the aspect, the inner surfaces of all of the four corner portions preferably have the curved shape. According to this structure, bubbles more hardly adhere to the corner portions and the flowing state is further improved when the sample or the like is stirred, whereby the stirring efficiency can be further improved.

The aforementioned container for an analyzer according to the aspect preferably further comprises a closing part for closing the container for an analyzer. According to this structure, the container for an analyzer can be easily closed with the closing part.

In this case, the closing part preferably includes a closing state holding part holding a state closing the container for an analyzer. According to this structure, the closing state holding part can hold the closing part in the state closing the container for an analyzer, whereby the closing part can be prevented from displacement resulting from external force. Thus, the sample contained in the container body can be prevented from an inconvenience of contaminating another sample or a reagent due to displacement of the closing part.

In the aforementioned container for an analyzer according to the aspect, the bottom surface part, the first side walls and the second side walls may consist of olefinic thermoplastic resin.

In the aforementioned container for an analyzer according to the third aspect, the bottom surface part, the first side walls and the second side walls may consist of polymethyl pentene.

In the aforementioned structure of the container for an analyzer which is a detection container, the interval between the pair of light transmission walls of the detection container is preferably at least 3 mm and not more than 4 mm. Thus, change of turbidity of the sample or the like can be easily detected by photoirradiation by setting the interval between the pair of light transmission walls to at least 3 mm while the quantity of the sample necessary for detection can be reduced by setting the interval between the pair of light transmission walls to not more than 4 mm.

In the aforementioned structure of the container for an analyzer which is a detection container, the interval between the pair of second side walls of the detection container is preferably at least 1.5 mm and not more than 3 mm. Thus, the pair of light transmission walls located between the pair of second side walls can be easily irradiated with light in detection by setting the interval between the pair of second side walls to at least 1.5 mm, while the quantity of the sample necessary for detection can be reduced by setting the interval between the pair of second side walls to not more than 3 mm.

According to the aspect of the invention, the flaw preventing part can prevent the outer surfaces of the light transmission walls from formation of flaws when the photoirradiation part is set in an insertion hole of a detector.

In this case, the flaw preventing part of the detection container includes a chamfer on the lower end thereof. According to this structure, the photoirradiation part can be smoothly inserted when the same is set in the insertion hole of the detector.

In the aforementioned structure of the container for an analyzer which is a detection container, the light transmission walls and the second side walls of the detection container preferably have thicknesses of not more than 0.5 mm. When the light transmission walls and the second side walls are constituted to have the small thicknesses of not more than 0.5 mm, heat can be efficiently transmitted to the sample.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a detection cell (detection container) according to a first embodiment of the present invention having a lid in an opening state;
Fig. 2 is a perspective view showing the detection cell according to the first embodiment of the present invention having the lid in a closed state as viewed along arrow A in Fig. 1;
Fig. 3 is a perspective view showing a cell member constituting the detection cell shown in Fig. 1;
Fig. 4 is a sectional view of the cell member taken along the line 100-100 Fig. 3;
Fig. 5 is a sectional view of the cell member taken along the line 200-200 Fig. 3;
Fig. 6 is a partially enlarged view of the cell member shown in Fig. 3 as viewed along arrow B;
Fig. 7 is a sectional view of the cell member taken along the line 300-300 Fig. 3;
Fig. 8 is a sectional view of the cell member taken along the line 400-400 Fig. 3;
Fig. 9 is a perspective view showing a lid member constituting the detection cell shown in Fig. 1;
Fig. 10 is a sectional view of the lid member taken along the line 500-500 in Fig. 9;
Fig. 11 is a sectional view of the lid member taken along the line 600-600 in Fig. 9;
Fig. 12 is a side elevational view showing a coupling part of the lid member shown in Fig. 9 as viewed along arrow C;
Figs. 13 to 15 are schematic diagrams for illustrating gene detection through the detection cell shown in Fig. 1;
Fig. 16 is a perspective view showing a detection cell packing container according to a second embodiment of the present invention;
Fig. 17 is a plan view of the detection cell packing container shown in Fig. 16;
Fig. 18 is a sectional view of the detection cell packing container taken along the line 800-800 in Fig. 17;
Fig. 19 is a sectional view of the detection cell packing container taken along the line 810-810 in Fig. 17;
Fig. 20 is a perspective view showing the detection cell packing container according to the second embodiment in a state storing a detection cell;
Fig. 21 is a plan view of the detection cell packing container storing the detection cell shown in Fig. 20;
Fig. 22 is a front elevational view of the detection cell packing container storing the detection cell as viewed along arrow H in Fig. 20;
Fig. 23 is a sectional view of the detection cell packing container storing the detection cell taken along the line 820-820 in Fig. 21;
Fig. 24 is a perspective view showing the detection cell packing container storing the detection cell in a state closed with a sheet; and
Figs. 25 and 26 are diagrams for illustrating an operation of taking out the detection cell from the detection cell packing container according to the second embodiment of the present invention shown in Fig. 20.

### DESCRIPTION OF THE PREFERRED EMBODIMENTS

Embodiments of the present invention are now described with reference to the drawings.

### (First Embodiment)

A first embodiment of the present invention is described with reference to a disposable detection cell 1 employed for a gene amplifier/detector as an exemplary container for an analyzer (detection container/reaction container) according to the present invention. In other words, the detection cell 1 according to the first embodiment is employed for a gene amplifier/detector injecting cancer derivation target nucleic acid (mRNAs) into the detection cell 1, amplifying the same by LAMP (loop-mediated isothermal amplification by Eiken Chemical Co., Ltd.) and detecting the target genes (target nucleic acids) by measuring turbidity of solutions following the amplification. The LAMP is disclosed in U.S. Patent No. 6410278 in detail.

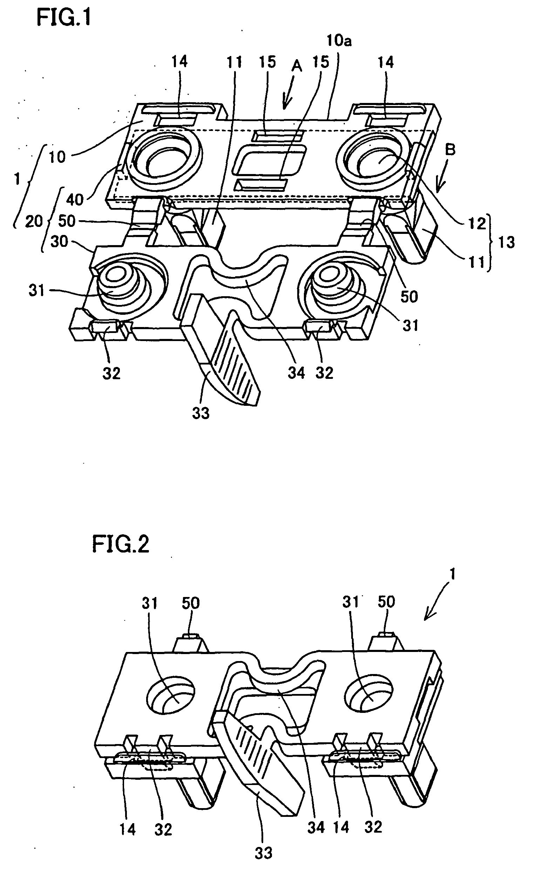

As shown in Fig. 1, the detection cell 1 according to the first embodiment is constituted by integrally combining two members, i.e., a cell member 10 and a lid member 20 with each other. The cell member 10 consists of light-transmittable heat-resistant transparent resin (crystalline olefinic thermoplastic resin such as polymethyl pentene (TPX), for example), and the lid member 20 consists of heat-resistant resin (high-density polyethylene, for example). The detection cell 1 is subjected to electron beam irradiation in a packed state before shipment, so that decomposed enzyme of human saliva or the like adherable in the process of manufacturing the detection cell 1 exerts no bad influence on amplification of genes. Polymethyl pentene, undiscolored by electron beam irradiation, having high chemical resistance and high heat resistance is a convenient material for the cell member 10.

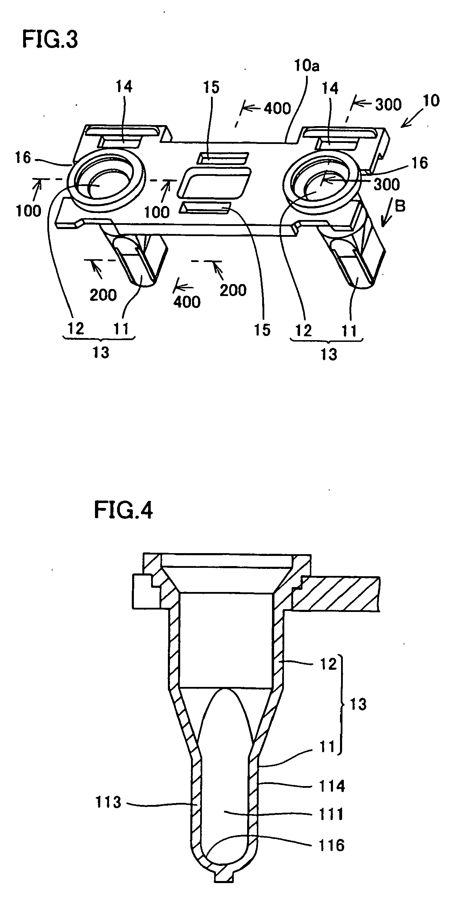

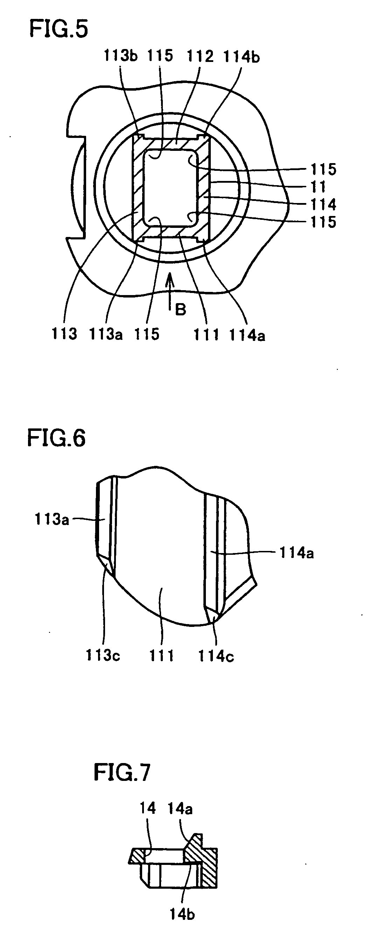

According to the first embodiment, two cell parts 13, two hook engaging holes 14, two lid member engaging holes 15 and two registration recess portions 16 are integrally formed on a base 10a in the cell member 10 constituting the detection cell 1, as shown in Figs. 1 and 3. Each cell part 13 includes a rectangular photoirradiation part (sample storage part) 11 located on a lower portion and a circular opening 12 located on an upper portion. The photoirradiation part 11, injected with a sample and irradiated with light in detection, has a rectangular sectional shape as shown in Fig. 5. Each circular opening 12 has a cross-sectional area larger than that of the rectangular photoirradiation part 11, as shown in Fig. 4.

As shown in Fig. 5, each photoirradiation part 11 is provided with a pair of light transmission walls consisting of an entrance wall 111 having a substantially flat inner surface and an exit wall 112, also having a substantially flat inner surface, arranged to be parallelly opposed to the entrance wall 111 at an interval of at least about 3 mm and not more than about 4 mm. The interval between the entrance wall 111 and the exit wall 112 is so set to at least about 3 mm that change of turbidity or the like of the sample can be easily detected by photoirradiation. Further, the interval between the entrance wall 111 and the exit wall 112 is so set to not more than about 4 mm that the quantity of the sample necessary for detection can be reduced. Further, both of the entrance wall 111 and the exit wall 112 have thicknesses of not more than about 0.5 mm. The entrance wall 111 and the exit wall 112 are so formed with the small thicknesses of not more than about 0. 5 mm that heat can be efficiently transmitted to the sample.

Each photoirradiation part 11 is also provided with a pair of side walls 113 and 114, having substantially flat inner surfaces, oppositely arranged at an interval of at least about 1.5 mm and not more than about 3 mm for coupling the entrance wall 111 and the exit wall 112 with each other. The interval between the pair of side walls 113 and 114 is so set to at least about 1.5 mm that light can be easily applied to the entrance wall 111 and the exist wall 112 located between the pair of side walls 113 and 114 in detection. Further, the interval between the pair of side walls 113 and 114 is so set to not more than about 3 mm that the quantity of the sample necessary for detection can be reduced. Both of the side walls 113 and 114 have thicknesses of not more than about 0.5 mm. The side walls 113 and 114 are so formed with the small thicknesses of not more than about 0.5 mm that heat can be efficiently transmitted to the sample. The entrance wall 111, the exit wall 112 and the pair of side walls 113 and 114 constitute the photoirradiation part 11 having the substantially rectangular (oblong) inner shape shown in Fig. 5.

The side walls 113 and 114 include projections 113a and 114a projecting with respect to the surface of the entrance wall 111 and projections 113b and 114b projecting with respect to the surface of the exit wall 112 respectively. The projections 113a, 113b, 114a and 114b have functions of preventing the surfaces of the entrance wall 111 and the exit wall 112 from flawing when each cell part 13 is set in a detector (not shown). If the projections 113a, 113b, 114a and 114b remarkably project with respect to the entrance wall 111 and the exist wall 112, however, the distances between the entrance wall 111 and the exit wall 112 and a warming part (not shown) of the detector are increased to reduce warming efficiency. In order to suppress reduction of the warming efficiency, therefore, the quantities of projection of the projections 113a, 113b, 114a and 114b are preferably minimized. More specifically, the quantities of projection of the projections 113a, 113b, 114a and 114b with respect to the entrance wall 111 and the exist wall 112 are preferably set to about 0.2 mm to not more than about 0.3 mm.

In the section shown in Fig. 5, four corner portions 115 on the inner surfaces of each photoirradiation part 111 have a substantially arcuate curved shape with a radius of curvature of not more than about 0.5 mm (preferably at least about 0.1 mm and not more than about 0.3 mm). Thus, the inner surfaces of the corner portions 115 are so formed in the substantially arcuate curved shape that bubbles hardly adhere to the corner portions 115 and a flowing state is improved when the sample or the like is stirred, whereby stirring efficiency can be improved. Further, the radius of curvature of the inner surfaces of the corner portions 115 is so reduced to not more than about 0.5 mm that the areas of the entrance wall 111 and the exist wall 112 can be remarkably inhibited from reduction resulting from the arcuate curved shape of the inner surfaces of the corner portions 115. When the inner surfaces of the corner portions 115 are so formed as to have a radius of curvature in the range of at least about 0.1 mm and not more than about 0.3 mm, reduction of the areas of the light transmission walls can be remarkably suppressed while improving the stirring efficiency.

Chamfers 113c and 114c are provided on the lowermost portions of the projections 113a, 113b, 114a and 114b, as shown in Fig. 6. Each cell part 13 can be smoothly set in the detector (not shown) through these chamfers 113c and 114c.

In the cross section shown in Fig. 4, a bottom surface part 116 of each photoirradiation part 11 of the cell member 10 is formed in a substantially arcuate curved shape. Thus, a level height allowing detection by photoirradiation can be obtained also when the quantity of the sample is small and the quantity of a liquid is also small.

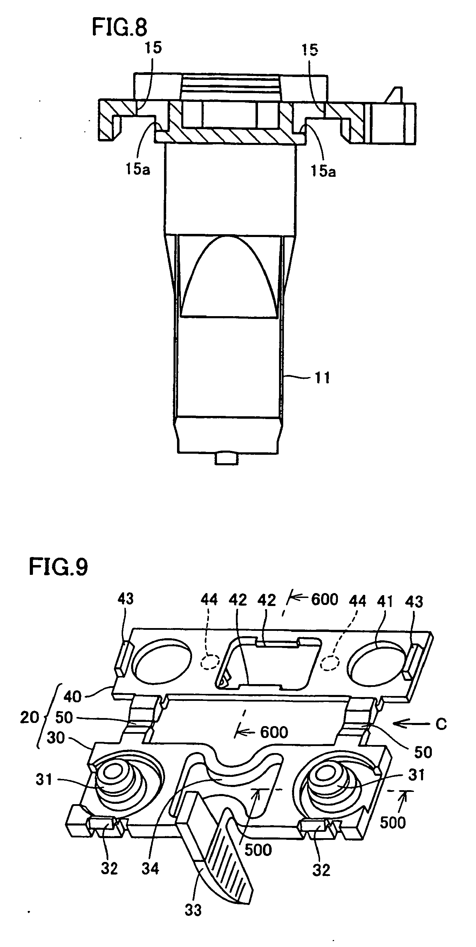

As shown in Figs. 3 and 7, the hook engaging holes 14 of the cell member 10 are provided with inclined parts 14a for simplifying insertion of hook parts 32 of the lid member 20 into the hook engaging holes 14 as described later and engaging portions 14b engaging with the forward ends of the hook parts 32. As shown in Figs. 3 and 8, the lid member engaging holes 15 of the cell member 10 are provided with engaging portions 15a engaging with the forward ends of cell member engaging segments 42 of the lid member 20 described later.

As shown in Fig. 9, the lid member 20 constituting the detection cell 1 is constituted of a lid part 30, a cell member mounting part 40 and coupling parts 50 for coupling the lid part 30 and the cell member mounting part 40 with each other. The lid part 30 is integrally formed with two closing parts 31, the two hook parts 32, a knob part 33 and a position correcting part 34. The cell member mounting part 40 is integrally formed with two cell member mounting holes 41, the two cell member engaging segments 42, two registration projecting portions 43 and two detector mounting parts 44.

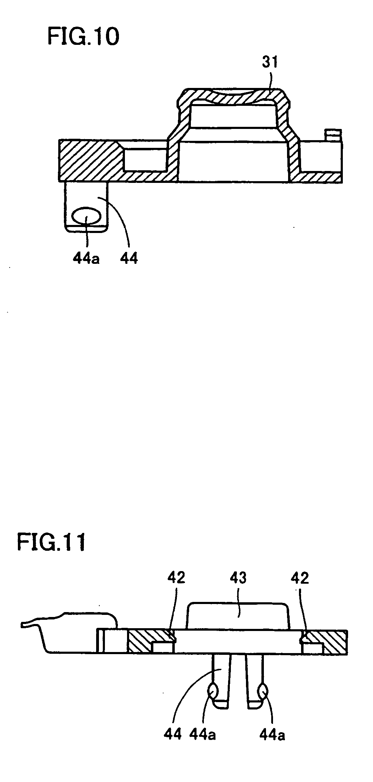

The closing parts 31 of the lid part 30 are provided on positions corresponding to the two openings 12 of the cell member 10 (see Fig. 1). The closing parts 31 are formed in a shape capable of closing the openings 12 (see Fig. 4) of the two cell parts 13, as shown in Fig. 10. Further, the two hook parts 32 are arranged to be engageable with the two hook engaging holes 14 of the cell member 10 (see Fig. 1) when the closing parts 31 are closed, as shown in Fig. 9. The knob part 33 is provided on the central portion of an end surface of the lid part 30. This knob part 33 is so provided that the user can easily grasp the detection cell 1 when disposing the same in the state shown in Fig. 2 after completion of detection. The position correcting part 34 is elastically provided between the two closing parts 31 of the lid part 30. This position correcting part 34 has a function of correcting the positions of the two closing parts 31 with respect to the two openings 12.

As shown in Fig. 9, the two cell parts 13 of the cell member 10 (see Fig. 1) are inserted into the cell member mounting holes 41 of the cell member mounting part 40. The two cell member engaging segments 42 are provided on the central portion of the cell member mounting part 40 to be opposed to each other at a prescribed interval as shown in Fig. 9, and have a sectional shape with a tapered forward end as shown in Fig. 11. The cell member engaging segments 42 engage with the engaging parts 15a (see Fig. 8) of the two lid member engaging holes 15 of the cell member 10. The two registration projecting portions 43 of the cell member mounting part 40 are arranged on both ends of the cell member mounting part 40 as shown in Fig. 9, to be fitted into the two registration recess portions 16 (see Fig. 3) of the cell member 10. The two detector mounting parts 44 of the cell member mounting part 40 are provided on the back surface of the cell member mounting part 40 as shown in Fig. 9, in order to mount the detection cell 1 on the detector (not shown). The detector mounting parts 44 are divided at the center from each other and have projections 44a on side surfaces thereof, as shown in Fig. 11.

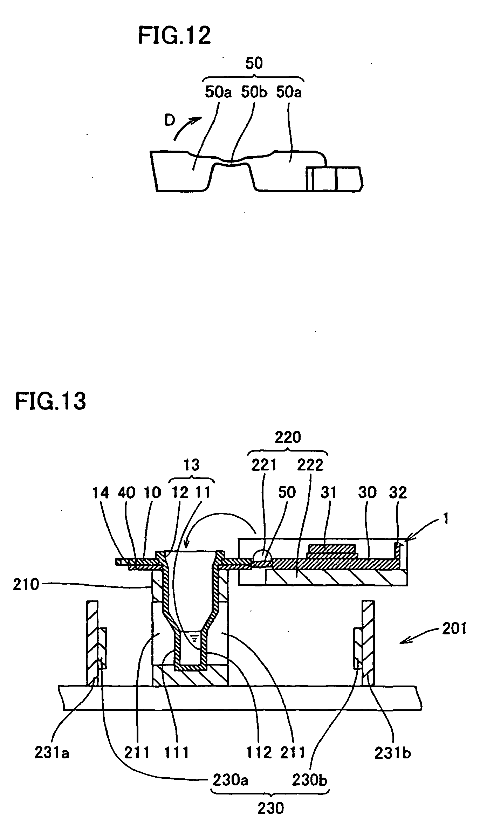

As shown in Fig. 12, each coupling part 50 is constituted of two thick-walled portions 50a and a thin-walled portion 50b located between the two thick-walled portions 50a. The thin-walled portion 50b has a concavely bent shape, to be easily bendable in a direction (along arrow D in Fig. 12) for closing each closing part 31.

In order to assemble the detection cell 1 shown in Fig. 1, the two cell parts 13 (see Fig. 3) of the cell member 10 are inserted into the two cell member mounting holes 41 (see Fig. 9) of the cell member mounting part 40 of the lid member 20 while the cell member engaging segments 42 (see Fig. 9) of the cell member mounting part 40 are engaged with the engaging portions 15a (see Fig. 8) of the lid member engaging holes 15 of the cell member 10. Further, the two registration recess portions 16 (see Fig. 3) of the cell member 10 are fitted into the two registration projecting portions 43 (see Fig. 9) of the cell member mounting part 40. Thus, the detection cell 1 is integrally assembled.

When the closing parts 31 open in Fig. 1 are closed as shown in Fig. 2, the two hook parts 32 of the lid part 30 engage with the corresponding hook engaging holes 14 of the cell member 10 respectively. Thus, the closing parts 31 are held in the closed state.

Figs. 13 to 15 are schematic diagrams for illustrating gene detection through the detection cell 1 according to the first embodiment. The gene detection through the detection cell 1 according to the first embodiment is now described with reference to Figs. 13 to 15. As hereinabove described, the detection cell 1 according to the first embodiment amplifies the cancer derivation target nucleic acid (mRNAs) injected into the same through the LAMP and detects the target genes (target nucleic acids) by measuring turbidity of the solutions following the amplification. As shown in Fig. 13, a detector 201 employed for the gene detection through the detection cell 1 according to the first embodiment includes a reaction part (amplification part) 210, a closing mechanism part 220 and a turbidity detection part 230 detecting liquid turbidity in the detection cell 1. The reaction part 210 is provided with photoirradiation grooves 211 for applying light to the detection cell 1. The lid closing mechanism part 220 includes a shaft 221 rotated by a driving mechanism (not shown) and a lid closing arm 222 mounted on the shaft 221 to be rotated following rotation of the shaft 221. The turbidity detection part 230 is constituted of an LED light source part 230a mounted on a substrate 231a and a photodiode part 230b mounted on another substrate 231b.

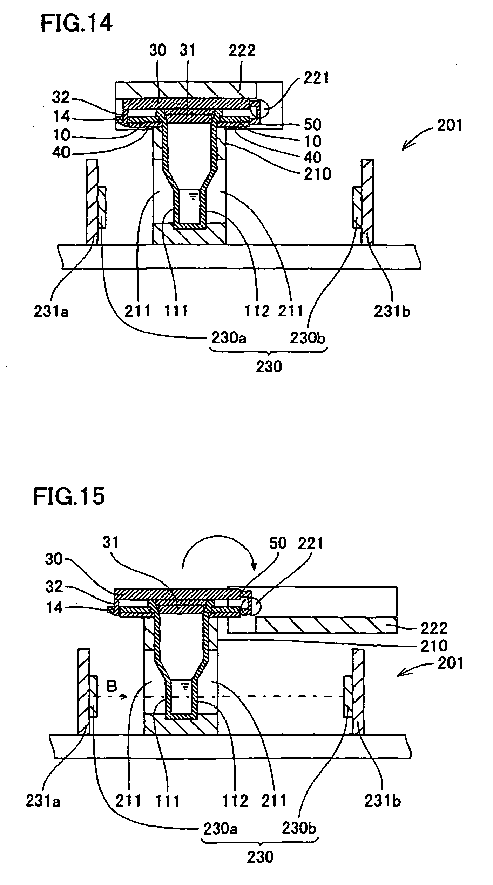

More specifically, the cell parts 13 of the detection cell 1 are set on the reaction part 210 of the detector 201 while the lid part 30 of the detection cell 1 is placed on the lid closing arm 222 of the lid closing mechanism part 220. Samples suspected to contain the target genes and reagents are injected into the photoirradiation parts 11 of the cell parts 13 of the detection cell 1, and the lid part 30 of the detection cell 1 is closed. Referring to Fig. 13, the lid part 30 is open immediately after injection of the samples and the reagents into the cell parts 13. From this state, the lid closing arm 222 mounted on the shaft 221 rotated by the driving mechanism (not shown) is rotated about the shaft 221 along arrow in Fig. 13. Thus, the closing parts 31 of the lid part 30 placed on the lid closing arm 222 are rotated toward the openings 12 of the cell parts 13 to be closed with respect to the openings 12 as shown in Fig. 14. Once the closing parts 31 are closed, this closed state is kept due to the engagement of the hook parts 32 of the lid part 30 and the hook engaging holes 14 of the cell member 10, so that the closing parts 31 are prevented from reopening. Thereafter the shaft 221 is oppositely rotated so that the lid closing arm 222 mounted on the shaft 221 returns to the initial position as shown in Fig. 15. Thus, the lid part 30 is closed.

After completion of the aforementioned lid closing operation, liquids contained in the photoirradiation parts 11 of the cell parts 13 are warmed by the warming part (not shown) from about 20°C to about 65°C, thereby amplifying the target nucleic acide (mRNAs) by LAMP (gene amplification) reaction. Whitening resulting from amplification products formed following the amplification is turbidimetrically detected through the turbidity detection part 230. More specifically, light of about 1 mm in diameter is applied from the LED light source part 230a to the entrance walls 111 of the photoirradiation parts 11 of the cell parts 13 subjected to amplification along arrow B (see Figs. 1 and 15) through the photoirradiation grooves 211 of the reaction part 210. Then, the photodiode part 230b receives the light outgoing from the exit walls 112 of the photoirradiation parts 11. Thus, the turbidity of the liquids in the photoirradiation parts 11 of the cell parts 13 subjected to amplification is measured. An amplification rise time indicating the time up to sudden increase of the numbers of copies of the target nucleic acid (mRNAs) in the samples is detected from the measured data on the basis of change of turbidity. The concentrations of the target genes are calculated from the amplification rise time on the basis of a previously created calibration curve. In the calibration curve showing the amplification rise time and the target gene concentrations on the axes of abscissa and ordinate respectively, the target gene concentrations are increased as the amplification rise time is reduced in general. Thus, gene (nucleic acid) detection is performed. After completion of the gene detection, the user grasps the knob part 33 of the detection cell 1 for disposing the detection cell 1.

According to the first embodiment, as hereinabove described, the cell member 10 and the lid member 20 are integrally combined with each other for constituting the detection cell 1 so that the cell member 10 and the lid member 20 are integrally coupled with each other, whereby no lid part 30 of the lid member 20 falls on another detection cell 1. Thus, no samples in the other detection cell 1 are contaminated due to a fall of the lid member 20.

According to the first embodiment, further, the hook parts 32 and the hook engaging holes 14 are so provided that the lid part 30 of the detection cell 1 can be easily kept closed by engaging the hook parts 32 and the hook engaging holes 14 with each other, whereby the lid part 30 can be prevented from opening by external force. Thus, the samples contained in the cell parts 13 can be prevented from contaminating other samples or reagents by opening of the lid part 30. The hook parts 32 and the hook engaging holes 14 are formed to engage with each other when the closing parts 31 of the lid part 30 close the openings 12 of the cell parts 13, thereby keeping the openings 12 of the cell parts 13 closed with the closing parts 31.

According to the first embodiment, the cell parts 13 are so provided with the photoirradiation parts 11 irradiated with light that the target genes can be detected by externally applying light to the samples contained in the photoirradiation parts 11 of the cell parts 13.

According to the first embodiment, the cross-sectional area of the openings 12 is rendered larger than that of the photoirradiation parts 11 so that the samples can be more easily injected into the openings 12 as compared with openings having a small cross-sectional area. Further, level heights necessary for measuring the samples can be obtained by the photoirradiation parts 11 having the small cross-sectional area also when the quantities of the samples are small, whereby the samples having small quantities can also be measured by photoirradiation. Further, the openings 12 are so circularly shaped that the same can be more easily closed with the closing parts 31 of the lid part 30 as compared with openings having a rectangular shape or the like.

According to the first embodiment, the cell member 10 is provided with the two cell parts 13 while the lid part 30 is provided with the two closing parts 31 so that two samples can be detected in parallel with each other, whereby prompt detection can be performed.

According to the first embodiment, the elastic position correcting part 34 is so provided between the two closing parts 31 that the positions of the two closing parts 31 can be easily properly corrected also when theses positions are displaced from the two openings 12, whereby the two openings 12 can be reliably closed with the closing parts 31.

According to the first embodiment, the lid part 30 of the lid member 30 is so provided with the knob part 33 that the user can easily dispose the detection cell 1 by grasping the knob part 33 after completion of detection.

According to the first embodiment, as hereinabove described, the pairs of side walls 13 and 14 having the substantially flat inner surfaces are so provided that voids necessary for detection by photoirradiation can be formed between the pairs of side walls 113 and 114 also when the intervals therebetween are reduced to some extent. Thus, the intervals between the pairs of side walls 113 and 114 can be so reduced as to reduce the volumes of the portions enclosed with the pairs of side walls 113 and 114, the entrance walls 111 and the exit walls 112. Thus, the quantities of samples necessary for detection can be so reduced that the samples having small quantities can also be detected.

According to the first embodiment, the inner surfaces of the corner portions 115 formed on the intersections between the pairs of side walls 113 and 114, the entrance walls 111 and the exit walls 112 are formed to have the substantially concave arcuate curved shape that bubbles hardly adhere to the corner portions 115 and the flowing state is improved when the samples or the like are stirred, whereby stirring efficiency can be improved.

According to the first embodiment, the side walls 113 and 114 are provided with the projections 113a and 114a projecting with respect to the surfaces of the entrance walls 111 and the projections 113b and 114b projecting with respect to the surfaces of the exit walls 112 respectively, whereby the surfaces of the entrance walls 111 and the exit walls 112 can be prevented from flawing when the cell parts 13 are inserted into the reaction part 210 (see Fig. 13) of the detector 200.

According to the first embodiment, the chamfers 113c and 114c are so provided on the lower ends of the projections 113a, 113b, 114a and 114b of the pairs of side walls 113 and 114 that the cell parts 13 can be smoothly inserted into the reaction part 210 (see Fig. 13) of the detector 200.

According to the first embodiment, the inner surfaces of the bottom surface parts 116 is formed in the substantially concave arcuate curved shape so that level heights allowing detection by photoirradiation can be obtained also when the samples are in small quantities and the quantities of the liquids are small.

### (Second Embodiment)

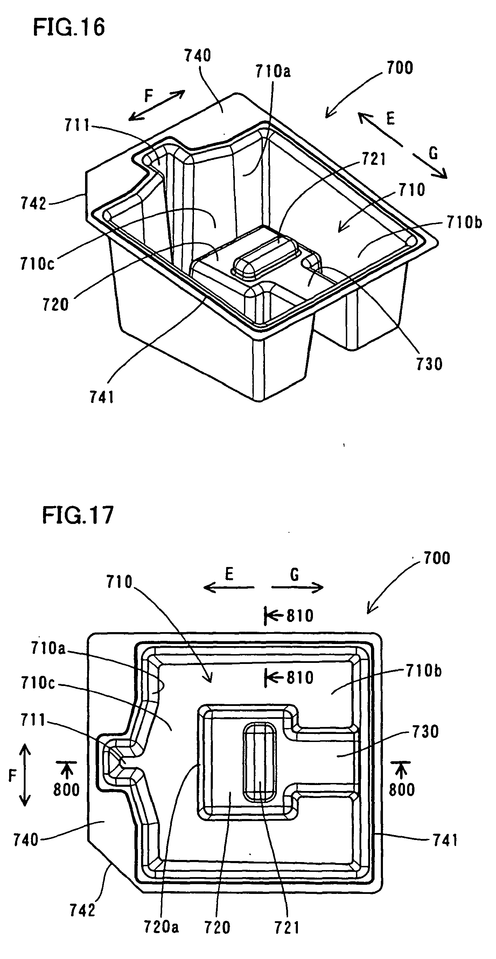

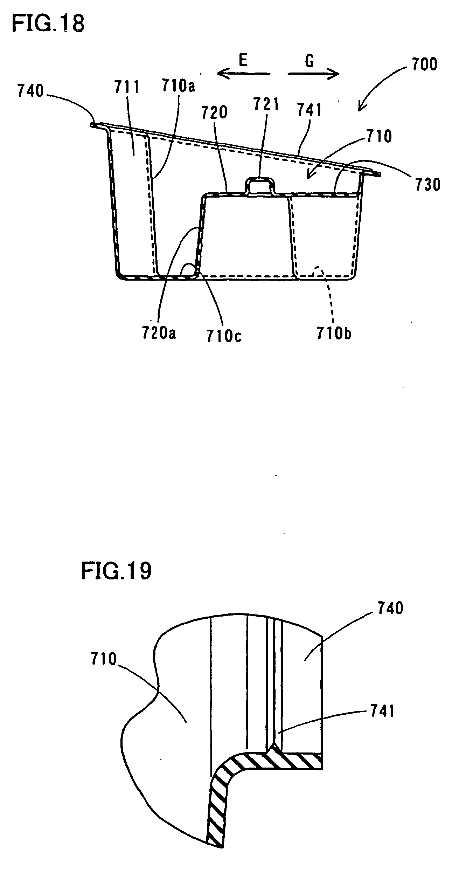

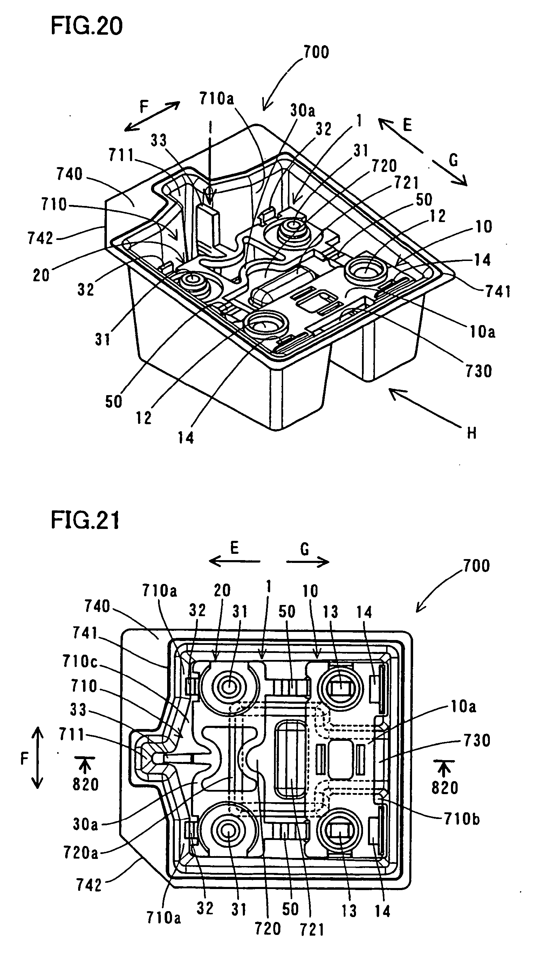

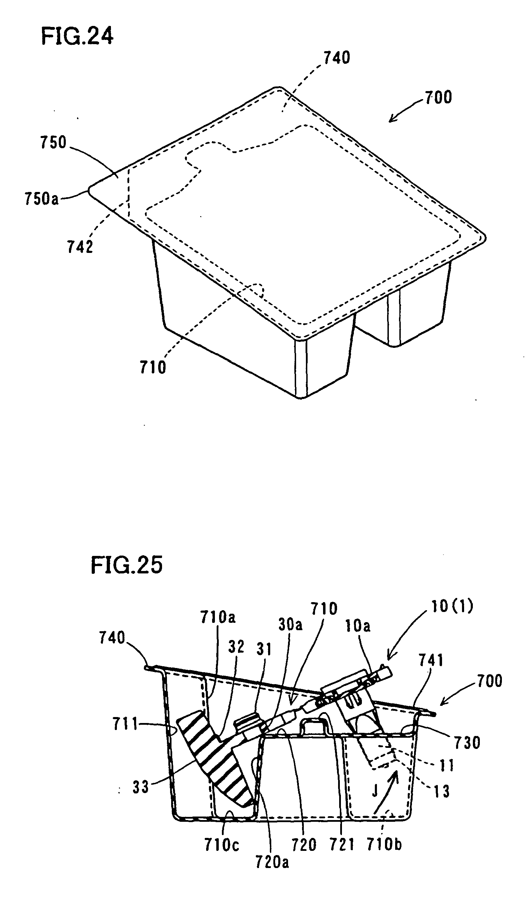

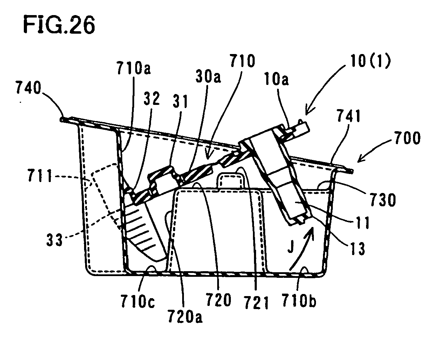

Figs. 16 to 19 are diagrams for illustrating the structure of a detection cell packing container 700 according to a second embodiment of the present invention, and Figs. 20 to 24 are diagrams for illustrating a state of storing a detection cell 1 in the detection cell packing container 700 according to the second embodiment of the present invention. Figs. 25 and 26 are diagrams for illustrating an operation of taking out the detection cell 1 from the detection cell packing container 700 according to the second embodiment of the present invention shown in Fig. 20. The detection cell 1 stored in the detection cell packing container 700 according to the second embodiment of the present invention is similar to the detection cell 1 (see Figs. 1 to 12) described with reference to the aforementioned first embodiment. The structure of the detection cell packing container 700 according to the second embodiment of the present invention is now described with reference to Figs. 16 to 19 and 24 to 26.

As shown in Figs. 16 to 18, the detection cell packing container 700 according to the second embodiment includes a recess portion 710 for storing the detection cell 1, a concave first support part 720 enclosed with the recess portion 710, a concave second support part 730 formed continuously with the first support part 720 and an edge part 740 outwardly extending from an opening of the recess portion 710. The recess portion 710, the first and second support parts 720 and 730 and the edge part 740 constitute the body of the detection cell packing container 700. The detection cell packing container 700 further includes a sheet 750 (Fig. 24). This detection cell packing container 700, consisting of translucent resin (polypropylene, for example) transmitting light to some extent, is so constituted that storage of the detection cell 1 can be externally visually recognized. The inner side surfaces of the recess portion 710 of the detection cell packing container 700 are inwardly inclined downward so that a plurality of detection cell packing containers 700 can be disposed in an overlapping state after the detection cells 1 are taken out.

Portions of the recess portion 710 along arrows G and F with reference to the first support part 720 are referred to first and second recess portions 710b and 710c respectively. The first recess portion 710b stores cell parts 13. The second recess portion 710c is a space for rendering the cell parts 13 upwardly movable while the first support part 720 partially supports a lid member 20. The first recess portion 710b has a larger cross-sectional area than the cell parts 13. The length between the bottom surface of the first recess portion 710b and the upper surface of the second support part 730 is larger than the length between the bottom surfaces of the cell parts 13 and openings 12. Therefore, photoirradiation parts 11 stored in the first recess portion 710b are not in contact with the inner surfaces of the first recess portion 710b. It is assumed that the expression "the second support part 730 supports a cell member 10" includes both of a case where the second support part 730 supports the cell member 10 through a lid member 20 and a case where the second support part 730 supports the cell member 10 without through the lid member 20 in the following description.

A groove part 711 for receiving a knob part 33 of the detection cell 1 in an operation of taking out the detection cell 1 described later is formed on a prescribed position of the recess portion 710 of the detection cell packing container 700 (see Figs. 25 and 26). A registration projecting portion 721 for registering the stored detection cell 1 is formed on an upper portion of the first support part 720. As shown in Figs. 16 to 18, an end of the second support part 730 along arrow G is connected to a side surface of the recess portion 710. The width of the second support part 730 along arrow F is smaller than that of the first support part 720 along arrow F. The edge part 740 is upwardly inclined along arrow E in Fig. 16. As shown in Figs. 16 to 19, a weld 741 is formed on the edge part 740 to enclose the recess portion 710. This weld 741 is dissolved and solidified in heat treatment for closing the detection cell packing container 700 storing the detection cell 1 with the sheet 750 of polypropylene or the like thereby bonding the sheet 750 and the edge port 740 of the detection cell packing container 700 to each other, as shown in Fig. 24. Further, an oblique edge 742 is formed on a prescribed portion of the edge part 740, as shown in Figs. 16 and 17. This oblique edge 742 is so provided that the user can easily grasp an end 750a of the sheet 750 for opening the detection cell packing container 700 closed with the sheet 750 (see Fig. 24).

The structure for packing the detection cell 1 with the detection cell packing container 700 according to the second embodiment of the present invention is now described with reference to Figs. 20 to 26. As shown in Figs. 20 to 23, the detection cell 1 is horizontally stored in the detection cell packing container 700. The two cell parts 13 of the cell member 10 of this detection cell 1 are coupled with each other by a cell coupling part 10a, while two closing parts 31 of the lid part 30 of the detection cell 1 are coupled with each other by a lid coupling part 30a. When the detection cell 1 is stored in the detection cell packing container 700, the cell coupling part 10a of the detection cell 1 is supported by the second support part 730 of the detection cell packing container 700 while a portion of the lid coupling part 30a of the detection cell 1 closer to the cell coupling part 10a is supported by the first support part 720. When the detection cell 1 is stored in the detection cell packing container 700, the registration projecting portion 721 of the first support part 720 enters a portion of the detection cell 1 enclosed with the cell coupling part 10a, the lid coupling part 30a and two coupling parts 50 of the detection cell 1, as shown in Figs. 20 and 21. This registration projecting portion 721 comes into contact with the cell coupling part 10a of the detection cell 1, thereby regulating movement of the detection cell 1 along arrow E (see Fig. 20). Thus, the knob part 33 and two hook parts 32 of the detection cell 1 are stored in the detection cell packing container 700 without coming into contact with the inner surfaces of the recess portion 710 of the detection cell packing container 700.

The outer side surfaces of the detection cell 1 located on ends of the cell member 10 along arrow G (see Fig. 20) come into contact with the inner side surfaces of the recess portion 710 of the detection cell packing container 700, thereby regulating movement of the detection cell 1 along arrow G. Further, the outer side surfaces of the detection cell 1 located on both ends of the cell member 10 along arrow F (see Fig. 20) come into contact with the inner side surfaces of the recess portion 710 of the detection cell packing container 700, thereby regulating movement of the detection cell 1 along arrow F. The photoirradiation parts 11 of the cell parts 13 of the detection cell 1 are stored in the detection cell packing container 700 without coming into contact with the inner surfaces of the recess portion 710 as shown in Figs. 21 to 23, due to the aforementioned regulation of movement along arrows E, F and G.

The operation of taking out the detection cell 1 is now described with reference to Figs. 20, 23, 25 and 26. According to the second embodiment, the detection cell 1 is shipped in the state stored in the detection cell packing container 700 closed with the sheet 750 (see Fig. 24). Therefore, the user must take out the detection cell 1 from the detection cell packing container 700 in order to use the same.

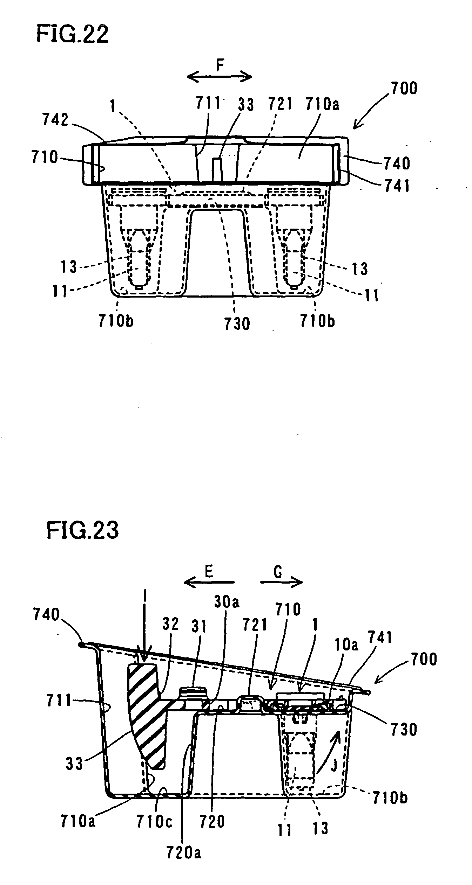

In this operation of taking out the detection cell 1, the user wears gloves on both hands for holding the detection cell packing container 700 with the first hand while grasping the end 750a of the sheet 750 (see Fig. 24) closing the detection cell packing container 700 and opening the same with the second hand. He/she downwardly presses the knob part 33 of the detection cell 1 along arrow I in Figs. 20 and 23 with a finger of the first hand not holding the detection cell packing container 700. Thus, the cell member 10 of the detection cell 1 is upwardly rotated along arrow J in Figs. 23, 25 and 26 about the back surface of the lid coupling part 30a of the lid part 30 coming into contact with the first support part 720, i.e., while the first support part 720 supports the lid part 30, as shown in Figs. 25 and 26. In the state shown in Figs. 25 and 26, the lid part 30 partially enters the second recess portion 710c and a prescribed portion of the knob part 33 of the detection cell 1 comes into contact with a side surface 720a of the first support part 720 while the two hook parts 32 of the detection cell 1 come into contact with a side surface 710a (see Fig. 26) of the recess portion 710. In the state shown in Figs. 25 and 26, further, the detection cell 1 is inclined with respect to the detection cell packing container 700 while the cell member 10 of the detection cell 1 upwardly projects from an opening of the recess portion 710. In the process of this rotation of the detection cell 1, the photoirradiation parts 11 of the cell parts 13 of the detection cell 1 are not in contact with the inner surfaces of the recess portion 710, as shown in Figs. 23 and 25. From this inclined state of the detection cell 1, the user grasps both longitudinal side surfaces of the upwardly projecting cell member 10 of the detection cell 1 with the second hand not holding the detection cell packing container 700 for taking out the detection cell 1 from the detection cell packing container 700. Then, he/she sets the detection cell 1 on the reaction part (amplification part) 210 of the detector 201 employed for the gene detection according to the first embodiment shown in Fig. 13.

According to the second embodiment, as hereinabove described, the detection cell packing container 700 is constituted of the recess portion 710 for storing the detection cell 1, the concave second support part 730 supporting the cell coupling part 10a of the cell member 10 and the concave first support part 720 partially supporting the portion of the lid coupling part 30a of the lid part 30 closer to the cell coupling part 10a while the first and second support parts 720 and 730 are formed to support the detection cell 1 so that the photoirradiation parts 11 of the cell parts 13 are not in contact with the inner surfaces of the recess portion 710 of the detection cell packing container 700, whereby the cell parts 13 of the detection cell 1 can be prevented from coming into contact with the inner surfaces of the detection cell packing container 700 and being flawed. According to the second embodiment, further, the first and second support parts 720 and 730 are so constituted that the detection cell 1 can be inclined and taken out by downwardly applying pressing force to the knob part 33 of the detection cell 1 while supporting the detection cell 1, whereby the user can easily take out the detection cell 1 from the detection cell packing container 700.

Although the present invention has been described and illustrated in detail, it is clearly understood that the same is by way of illustration and example only and is not to be taken by way of limitation, the spirit and scope of the present invention being limited only by the terms of the appended claims.

For example, while the two members, i.e., the cell member 10 and the lid member 20 are integrally combined with each other for constituting the detection cell 1 having the integrally coupled lid in the aforementioned first embodiment, the present invention is not restricted to this but a detection cell having an integrally coupled lid may alternatively be formed by a single member.

While the openings 12 of the cell parts 13 are circularly formed in the aforementioned first embodiment, the present invention is not restricted to this but the openings 12 of the cell parts 13 may alternatively have a shape, such as a rectangular shape, other than the circular shape.

While the hook parts 32 and the hook engaging holes 14 exemplarily constitute a closing state holding part for keeping the lid part 30 in the closed state in the aforementioned first embodiment, the present invention is not restricted to this but a closing state holding part constituted of elements other than the hook parts 32 and the hook engaging holes 14 may alternatively be employed.

While the detection cell 1 (detection container) according to the present invention is applied to that for amplifying target genes by the LAMP in the aforementioned first embodiment, the present invention is not restricted to this but may alternatively be applied to a detection container amplifying target genes by polymerase chain reaction (PCR) or ligase chain reaction (LCR). Further, the detection cell according to the present invention may be applied to that for immune agglutination or blood-clotting reaction, for example, other than gene amplification.

While the first embodiment has been described with reference to the detection container for amplifying the target nucleic acids in the cell parts 13 and detecting the nucleic acids by irradiating the amplified samples with light, the present invention is not restricted to this but may be applied to a detection container for storing samples subjected to amplification of target nucleic acids in another container and irradiating the samples with light thereby detecting the nucleic acids.

The detection container according to the aforementioned first embodiment may be a reaction container for amplifying target nucleic acids in a container body. In this case, the samples subjected to amplification of the target nucleic acids in the reaction container may be sucked by passing suction needles through the closing parts 31 and discharged into another detection container to be thereafter detected. When the detection container according to the aforementioned first embodiment is employed as the reaction container, the cell parts 13 may not be transparent.

While the inner surfaces of the corner portions 115 of the photoirradiation parts 11 have the concave arcuate curved shape in the aforementioned first embodiment, the present invention is not restricted to this but the inner surfaces of the corner portions 115 of the photoirradiation parts 11 may alternatively have a curved shape other than the concave arcuate shape. For example, the inner surfaces of the corner portions 115 of the photoirradiation parts 11 may have a convex arcuate curved shape.

While the bottom surface parts 116 of the photoirradiation parts 11 have the concave arcuate shape in the aforementioned first embodiment, the present invention is not restricted to this but the bottom surface parts 116 of the photoirradiation parts 11 may alternatively have a flat shape or the like.

While the detection cell 1 is taken out from the detection cell packing container 700 by downwardly pressing the knob part 33 of the detection cell 1 in the aforementioned second embodiment, the present invention is not restricted to this but a detection cell having no knob part may be taken out from the detection cell packing container 700 by downwardly pressing a portion of the detection cell opposite to a cell coupling part.

While the first and second recess portions 710b and 710c are continuous with each other in the aforementioned second embodiment, the present invention is not restricted to this but the first and second recess portions 710b and 710c may alternatively be separated through the first support part 720 or the like.

While the first support part 720 partially supports the lid part 30 in the aforementioned second embodiment, the present invention is not restricted to this but the first support part 720 may alternatively support the coupling parts 50.

While the second support part 730 supports the cell coupling part 10a in the aforementioned second embodiment, the present invention is not restricted to this but the second support part 730 may alternatively support portions of the cell member 10 located outward beyond the two cell parts 13.

## Claims

1. A container for an analyzer, comprising:
a bottom surface part (116);
a pair of first side walls (111, 112) uprighted from said bottom surface part and arranged to be opposed to each other with substantially flat inner surfaces,
wherein
said pair of first side walls are light transmission walls (111, 112) transmitting light, and
said container for an analyzer is a detection container (1); and
a pair of second side walls (113, 114) uprighted from said bottom surface part to intersect with said pair of first side walls and arranged to be opposed to each other with substantially flat inner surfaces, wherein
the inner surface of at least one of four corners (115) formed on intersections between said pair of first side walls and said pair of second side walls has a curved shape, **characterised in that**
said pair of first side walls of said detection container include a flaw preventing part (113a, 113b, 114a, 114b) formed to project with respect to the outer surfaces of said light transmission walls for preventing the outer surfaces of said light transmission walls from flawing.

2. The container for an analyzer according to claim 1, wherein
the inner surface that has said curved shape has an arcuate curved shape.

3. The container for an analyzer according to claim 2 , wherein
the inner surface that has the arcuate curved shape has an arcuate curved shape with a radius of curvature of not more than 0.5 mm.

4. The container for an analyzer according to any one of preceding claims 1-3, wherein
the inner surface of said bottom surface part has a substantially concave arcuate curved shape.

5. The container for an analyzer according to any one of preceding claims 1-4, wherein
the inner surfaces of all of said four corner portions have said curved shape.

6. The container for an analyzer according to any one of preceding claims 1-5, further comprising a closing part (31) for closing said container for an analyzer.

7. The container for an analyzer according to claim 6, wherein
said closing part includes a closing state holding part (14, 32) holding a state closing said container for an analyzer.

8. The container for an analyzer according to any one of preceding claims 1-7, wherein
said bottom surface part, said first side walls and said second side walls consist of olefinic thermoplastic resin.

9. The container for an analyzer according to any one of preceding claims 1-7, wherein
said bottom surface part, said first side walls and said second side walls consist of polymethyl pentene.

10. The container for an analyzer according to any one of preceding claims 1-9,
wherein
the interval between said pair of light transmission walls of said detection container is at least 3 mm and not more than 4 mm.

11. The container for an analyzer according to any one of preceding claims 1-9,
wherein
the interval between said pair of second side walls (113, 114) of said detection container is at least 1.5 mm and not more than 3 mm.

12. The container for an analyzer according to any one of preceding claims 1-9 10, wherein
said flaw preventing part of said detection container includes a chamfer (113c, 114c) on the lower end thereof.

13. The container for an analyzer according to any one of preceding claims 1-9 10, wherein
said light transmission walls (111, 112) and said second side walls (113, 114) of said detection container have thicknesses of not more than 0.5 mm.

## Patentansprüche

1. Behälter für einen Analysator, umfassend:
einen unteren Oberflächenteil (116);
ein Paar erster Seitenwände (111, 112), die sich von dem unteren Oberflächenteil aufrecht erstrecken und so angeordnet sind, dass sie einander mit im Wesentlichen ebenen inneren Oberflächen gegenüberliegen, wobei das Paar erster Seitenwände Lichttransmissionswände (111, 112) sind, die Licht transmittieren, und der Behälter für einen Analysator ein Erfassungsbehälter (1) ist; und
ein Paar zweiter Seitenwände (113, 114), die sich von dem unteren Oberflächenteil aufrecht so erstrecken, dass sie das Paar erster Seitenwände schneiden, und so angeordnet sind, dass sie einander mit im Wesentlichen ebenen inneren Oberflächen gegenüberliegen, wobei
die innere Oberfläche wenigstens einer von vier Ecken (115), die an Schnittstellen zwischen dem Paar erster Seitenwände und dem Paar zweiter Seitenwände ausgebildet sind, eine gekrümmte Form aufweist, **dadurch gekennzeichnet, dass**
das Paar erster Seitenwände des Erfassungsbehälters einen Beschädigungsverhinderungsteil (113a, 113b, 114a, 114b) beinhaltet, der so ausgebildet ist, dass er mit Bezug auf die äußeren Oberflächen der Lichttransmissionswände hervorsteht, um eine Beschädigung der äußeren Oberflächen der Lichttransmissionswände zu verhindern.

2. Behälter für einen Analysator nach Anspruch 1, bei dem
die innere Oberfläche, welche die gekrümmte Form aufweist, eine bogenförmige gekrümmte Form aufweist.

3. Behälter für einen Analysator nach Anspruch 2, bei dem
die innere Oberfläche, welche die bogenförmige gekrümmte Form aufweist, eine bogenförmige gekrümmte Form mit einem Krümmungsradius von nicht mehr als 0,5 mm aufweist.

4. Behälter für einen Analysator nach einem der vorhergehenden Ansprüche 1-3, bei dem
die innere Oberfläche des unteren Oberflächenteils eine im Wesentlichen konkave, bogenförmige gekrümmte Form aufweist.

5. Behälter für einen Analysator nach einem der vorhergehenden Ansprüche 1-4, bei dem
die inneren Oberflächen aller vier Eckabschnitte die gekrümmte Form aufweisen.

6. Behälter für einen Analysator nach einem der vorhergehenden Ansprüche 1-5, der ferner einen Verschlussteil (31) zum Verschließen des Behälters für einen Analysator umfasst.

7. Behälter für einen Analysator nach Anspruch 6, bei dem
der Verschlussteil einen Verschlusszustandshalteteil (14, 32) beinhaltet, der einen den Behälter für einen Analysator verschließenden Zustand hält.

8. Behälter für einen Analysator nach einem der vorhergehenden Ansprüche 1-7, bei dem
der untere Oberflächenteil, die ersten Seitenwände und die zweiten Seitenwände aus olefinischem thermoplastischem Harz bestehen.

9. Behälter für einen Analysator nach einem der vorhergehenden Ansprüche 1-7, bei dem
der untere Oberflächenteil, die ersten Seitenwände und die zweiten Seitenwände aus Polymethylpenten bestehen.

10. Behälter für einen Analysator nach einem der vorhergehenden Ansprüche 1-9, bei dem
der Abstand zwischen dem Paar von Lichttransmissionswänden des Erfassungsbehälters wenigstens 3 mm und nicht mehr als 4 mm beträgt.

11. Behälter für einen Analysator nach einem der vorhergehenden Ansprüche 1-9, bei dem
der Abstand zwischen dem Paar zweiter Seitenwände (113, 114) des Erfassungsbehälters wenigstens 1,5 mm und nicht mehr als 3 mm beträgt.

12. Behälter für einen Analysator nach einem der vorhergehenden Ansprüche 1-9, bei dem
der Beschädigungsverhinderungsteil des Erfassungsbehälters an dessen unterem Ende eine Abschrägung (113c, 114c) beinhaltet.

13. Behälter für einen Analysator nach einem der vorhergehenden Ansprüche 1-9, bei dem
die Lichttransmissionswände (111, 112) und die zweiten Seitenwände (113, 114) des Erfassungsbehälters Dicken von nicht mehr als 0,5 mm aufweisen.

## Revendications

1. Récipient pour un analyseur, comprenant :
une partie (116) de surface de fond;
une paire de premières parois latérales (111, 112) dirigées vers le haut depuis ladite partie de surface de fond et agencées de manière à être en opposition l'une à l'autre avec des surfaces internes essentiellement plates, où
ladite paire de premières parois latérales sont des parois (111, 112) de transmission de lumière transmettant la lumière, et
ledit récipient pour un analyseur est un récipient de détection (1); et
une paire de deuxièmes parois latérales (113, 114) dirigées vers le haut depuis ladite partie de surface de fond de manière à croiser ladite paire de premières parois latérales et agencées de manière à être en opposition l'une à l'autre avec des surfaces internes essentiellement plates, où
la surface interne d'au moins l'un de quatre coins (115) formés sur des intersections entre ladite paire de premières parois latérales et ladite paire de deuxièmes parois latérales prend une forme incurvée, **caractérisée en ce que** ladite paire de premières parois latérales dudit récipient de détection incluent une partie (113 a, 113b, 114a, 114b) qui empêche les défauts formée de manière à se projeter par rapport aux surfaces externes desdites parois d'émission de lumière afin d'éviter la formation de défauts des surfaces externes desdites parois d'émission de lumière.

2. Récipient pour un analyseur selon la revendication 1, dans lequel
la surface interne qui prend ladite forme incurvée a une forme incurvée arquée.

3. Récipient pour un analyseur selon la revendication 2, dans lequel
la surface interne qui a la forme incurvée arquée a une forme incurvée arquée avec un rayon de courbure qui ne dépasse pas 0,5 mm.

4. Récipient pour un analyseur selon l'une quelconque des revendications précédentes 1 à 3, dans lequel
la surface interne de ladite partie de surface de fond a une forme incurvée arquée essentiellement concave.

5. Récipient pour un analyseur selon l'une quelconque des revendications précédentes 1 à 4, dans lequel
les surfaces internes de l'ensemble desdites quatre portions de coin prennent ladite forme incurvée.

6. Récipient pour un analyseur selon l'une quelconque des revendications précédentes 1 à 5, comprenant en plus une partie de fermeture (31) pour fermer ledit récipient pour un analyseur.

7. Récipient pour un analyseur selon la revendication 6, dans lequel
ladite partie de fermeture inclut une partie (14, 32) de maintien d'un état de fermeture maintenant un état fermant ledit récipient pour un analyseur.

8. Récipient pour un analyseur selon l'une quelconque des revendications précédentes 1 à 7, dans lequel
ladite partie de surface de fond, lesdites premières parois latérales et lesdites deuxièmes parois latérales se composent de résine thermoplastique oléfinique.

9. Récipient pour un analyseur selon l'une quelconque des revendications précédentes 1 à 7, dans lequel
ladite partie de surface de fond, lesdites premières parois latérales et lesdites deuxièmes parois latérales se composant de polyméthyle pentène.

10. Récipient pour un analyseur selon l'une quelconque des revendications précédentes 1 à 9, dans lequel
l'intervalle entre ladite paire de parois d'émission de lumière dudit récipient de détection est de 3 mm au moins et ne dépasse pas 4 mm.

11. Récipient pour un analyseur selon l'une quelconque des revendications précédentes 1 à 9, dans lequel
l'intervalle entre ladite paire de deuxièmes parois latérales (113, 114) dudit récipient de détection est de 1,5 mm au moins et ne dépasse pas 3 mm.

12. Récipient pour un analyseur selon l'une quelconque des revendications précédentes 1 à 9, dans lequel
ladite partie qui empêche les défauts dudit récipient de détection inclut un chanfrein (113c, 114c) sur l'extrémité inférieure de celle-ci.

13. Récipient pour un analyseur selon l'une quelconque des revendications précédentes 1 à 9, dans lequel
lesdites parois (111, 112) d'émission de lumière et lesdites deuxièmes parois latérales (113, 114) dudit récipient de détection ont une épaisseur qui ne dépasse pas 0,5 mm.
